# EUROPEAN PATENT APPLICATION

(11) **EP 1 282 031 A2**
(43) Date of publication of application: **05.02.2003**
(21) Application number: 02017294.6
(22) Date of filing: 01.08.2002
(51) Int. Cl.: G06F 3/023, H04M 1/247, H04M 1/725

(54) **A method of entering characters into a text string and a text-editing terminal using the method**

(30) Priority: 03.08.2001 US 921127
(71) Applicant: Nokia Corporation, 02150 Espoo (FI)
(72) Inventor: Kraft, Christian, 2650 Hvidovre, (DK)
(74) Representative: van Walstijn, Bartholomeus Gerard G.

(57) **Abstract**

A method of entering characters into a text string by means of a non-ambiguous word editor, includes that a user provides a key stroke by pressing one of a plurality of alpha-numeric keys for selecting a character group comprising a plurality of characters for entering a desired character included in this group. Then a character from said character group is displayed upon detection of the keystroke. The user is allowed to scroll through the character included in the character group for appointing the desired character. Finally the user selects the appointed character to be inserted into the entered text.

## Description

The invention relates to harmonisation of two frequently used but different editors using keyboards with limited a number of keys - e.g. a multi-tap based editor and a predictive texteditor for usability and consistency reasons.

Originally the so-called multi-tap editor was used for entering characters into a communication terminal with a set of ambiguous keys. A key of the keypad included at least one figure and a plurality of letters. The most commonly used characters are printed on the key. When pressing the "2/abc"-key once an "a" will be inserted, twice a "b" will be inserted, three times a "c" will be inserted and four times a "2" will be inserted.

The predictive editor tries to find words matching a string of entered text. Here the user just has to press the "2/abc" once regardless of which of the three letters "a", "b" or "c" he intends to enter. The multi-tap editor is used to allow the user to enter words not recognised by the predictive editor.

A problem today is that multi-tab and T9 work in very different basic ways. T9® is based on that "first you type" the word that you want, and then you use a scroll key for scrolling through the list of matching candidates. In Multi-tab the user has carefully to finalise each character, and then you go to next character.

According to a preferred aspect of the invention there is provided a method of entering characters into a text string by means of a non-ambiguous word editor, wherein a user provides a key stroke by pressing one of a plurality of alpha-numeric keys for selecting a character group comprising a plurality of characters for entering a desired character included in this group, a character from said character group is displayed upon detection of the key stroke, the user is allowed to scroll through the character included in the character group for appointing the desired character, and the user selects the appointed character to be inserted into the entered text. Hereby the method the be easy to use for users mainly using a predictive editor where the candidate words are handled in the same way as the candidate characters according to the invention.

Preferably, the user presses one alphanumeric key on a wireless telephone in order to provide said keystroke for selecting a character group. Furthermore, the user may scroll through the character list step by step by means of a key in the alphanumeric keypad dedicated for scrolling in an editor mode. Finally the user selects the appointed character by providing a new keystroke for selecting a character group including the following character.

According to a further aspect of the invention there is provided a text editing terminal comprising a keypad for entering characters into a text, said keypad has at least a plurality of character entry keys having respective groups of characters assigned; a display for displaying the entered text; a scroll key for appointing one of the characters in said respective groups of characters, and selection means for selecting the appointed character to be inserted into the entered text.

Preferably the text-editing terminal is a wireless telephone having a text messaging application.

According to a still further aspect of the invention there is provided a wireless telephone with a text editing application and comprising a key pad for entering characters into a text, said key pad has at least a plurality of character entry keys having respective groups of characters assigned, a display for displaying the entered text, a predictive editor for providing word candidates in dependence of a sequence of key strokes provided by the user by pressing one or more of said plurality of character entry keys, a non-ambiguous editor, for providing character candidates in dependence of a single of key stroke provided by the user by pressing one of said plurality of character entry keys, a scroll key common for the two editor for scrolling through candidates provided by said editors, and selection means for selecting the appointed character or word to be inserted into the entered text.

For a better understanding of the present invention and to understand how the same may be brought into effect reference will now be made, by way of example only, to accompanying drawings, in which: -
Fig. 1 schematically illustrates a preferred embodiment of a hand portable phone according to the invention.
Fig. 2 schematically shows the essential parts of a telephone for communication with e.g. a cellular network.
Fig. 3 shows the major components of the predictive text editor according to a preferred embodiment of the invention.
Fig. 4 shows the architecture of the ambiguity eliminating software according to a preferred embodiment of the invention.
Fig. 5 shows a display sequence when entering a text string into a communication terminal according to the invention.
Fig. 6 shows a flow diagram for handling text editing by means of a predictive editor and a non-ambiguous editor in a communication terminal according to the invention.

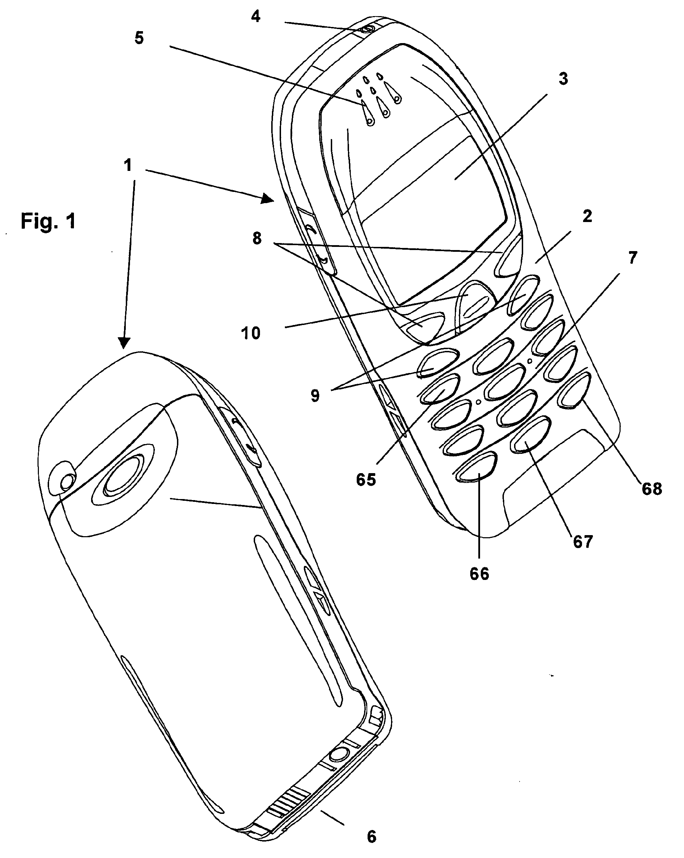

Fig. 1 shows a preferred embodiment of a phone according to the invention, and it will be seen that the phone, which is generally designated by 1, comprises a user interface having a keypad 2, a display 3, an on/off button 4, a speaker 5 (only openings are shown), and a microphone 6 (only openings are shown).

The phone 1 according to the preferred embodiment may be adapted for communication via a cellular network. However, the invention could be used in any type of device needing an editor and having an ambiguous set of alphanumeric keys.

According to the preferred embodiment the keypad 2 has a first group 7 of keys as alphanumeric keys, two soft keys 8, and a navigation key 10. Furthermore the keypad includes two call-handling keys 9 for initiating and terminating calls. The present functionality of the soft keys 8 is shown in separate fields in the display 3 just above the keys 8. This key layout is characteristic of e.g. the Nokia 6210™ phone.

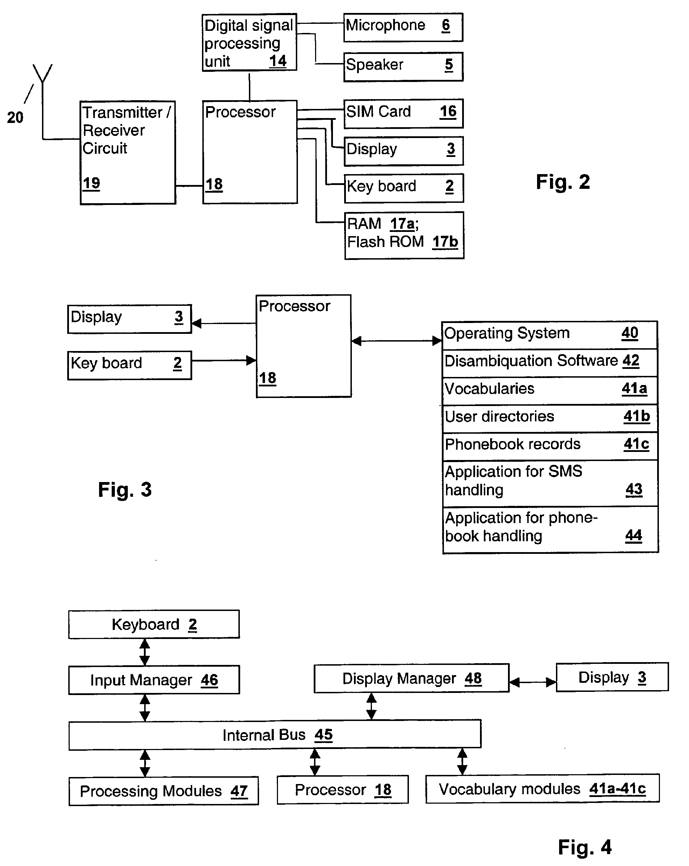

Fig. 2 schematically shows the most important parts of a preferred embodiment of the phone, said parts being essential to the understanding of the invention. A processor 18, which i.a. supports the GSM terminal software, controls the communication with the network via the transmitter/receiver circuit 19 and an antenna 20.

The microphone 6 transforms the user's speech into analogue signals; the signals formed thereby are A/D converted in an A/D converter (not shown) before the speech is encoded in an audio part 14. The encoded speech signal is transferred to the processor 18. The processor 18 also forms the interface to a RAM memory 17a and a Flash ROM memory 17b, a SIM card 16, the display 3 and the keypad 2 (as well as data, power supply, etc.). The audio part 14 speech-decodes the signal, which is transferred from the processor 18 to the earpiece 5 via a D/A converter (not shown).

### Basic Operation of the predictive text editor.

FIG. 3 shows the major components of the predictive text editor according to the invention. The display 3 and the keyboard 2 establish the man-machine interface. The processor 18 executes instructions and reads data from and writes data to the memory 17b. Software instructions in the memory 17b include an operating system 40, a disambiguation program 42 and its vocabularies 41a-c, and optionally one or more application programs, such as an SMS message handling application 43, and a WAP browser application 44.

Target applications programs for the predictive text editor used in a handset includes the electronic phone book memory, notepad, messages, calendar, and Internet browsing.

### System Architecture

FIG. 4 shows the architecture of the disambiguating software. Input from a keypad 2 is processed in an input manager 46. Input data is via internal bus means 45 passed to a processing module 47, which keeps a record of the current key sequence until the user has accepted a word based on this sequence by pressing the space key, e.g. being present by short pressing (shorter than e.g. 0.8 sec) the "0" key of alphanumeric keys. When a key stroke has been received by the processing module 47, the current key sequence is communicated via internal bus means 45 to the processor 18, which forwards the sequence to one or more modules 41 a-c acting as electronic vocabularies.

The vocabulary modules 41a-41c work in parallel and respond individually if they contain data matching the current keystroke sequence. One vocabulary module 41a might include a dictionary containing words in a language, e.g. English, defined by the user and used as editing language.
The vocabulary modules 41a-41c often supply a plurality of matching words - either being displayed or available through a selection list.

The processor 18 accumulates a complete list of matching words and character strings, as long as the number of keystrokes in the ambiguous string of keystrokes does not exceed a predetermined value, for the selection list. When the processor 18 has finalised the processing, the processing module 47 transfers the selection list to a display manager 48 and the display 3 via the internal bus means 45.

In the most cases, the disambiguation software will work as an editor server and therefore pass data strings directly to another client or application program 43, 44 running on the processor 18, too. In this case the keypad 2, the input manager 46 and the display manager 48 will be integrated in the application program 43, 44 using the predictive text editor as a server. These applications may include the electronic phone book memory, notepad, messages, calendar, and Internet browsing.

Table 1 shows a preferred key layout of the alphanumeric keys 7. When starting to type a word, the user simply presses the digit key containing the desired letter once.

**Table 1.**

| Layout of the alphanumeric keys 7. | | | | | |
|---|---|---|---|---|---|
| **1** | 65 | **2/abc** | | **3/def** | |
| **4/ghi** | | **5/jkl** | | **6/mno** | |
| **7/pqrs** | | **8/tuv** | | **9/wxyz** | |
| ***+** | 66 | **0** | 67 | # ⇑ | 68 |

If the user wants to type the word "case", he must press the following keys (once) "2/abc " to insert the "c", "2/abc " to insert the "a", "7/pqrs " to insert the "s", "3/def " to insert the "e", and finally the space key 67 in order to prepare for a new word.

The "1"-key 65 allows the user to insert special characters as punctuation mark, comma, question mark etc. The "*+"key 66 allows the user to scroll through candidates in the predictive editor as well and the non-ambiguish editor according to the invention. The processor 18 will successively display the candidates one by one in the position marked by a cursor in the display when the "*+"key 66 is pressed. The "#⇑"-key 68 allows the user to toggle between predictive and non-ambiguish editor, and upper and lower case for the editor.

The idea is to harmonise two editors - frequently used in e.g. cellular phones - for usability and consistency reasons. According to the invention, the Multi-tab editor is changed to work in the same basic way as T9®. According to the preferred embodiment of the invention, the user - when writing words or text - has to press one of the alpha-numeric keys for selecting a character group and following selecting one of the characters from the recently selected character group.

According to the preferred embodiment of the invention the non ambiguous editing is handled as follows:

The user presses the key on which the character he wants to enter is present (e.g. if the user wants to type a "C", he presses the "2/abc" key once and an "A" will appear in the display. Now the user may scroll through the other candidates being present on the "2/abc" key by pressing a candidate scroll key - preferably the "*+" key 66 until the desired character, "C", appears. Then the user may press another key, and this will accept the "C" character, or - if he wants to use a character from the "2/abc" key again - he may just press this key with waiting for a timeout once the "*+" key 66 has been pressed.

Hereby we gain a consistent and thereby better usability of the overall editing in the phone. From now on many people may know T9 inputting, but they may be having huge problems in learning the traditional multi-tap method which they need to e.g. spell a word.

Example of key-presses needed in the per se used multitap entry method and in the preferred embodiment of entering ambiguous characters in a non-predictive way.

When the user wants to write the word "Terrible", the per se used multitab entry method requires:

**Table 2.**

| Key presses used for entering the word "Terrible" when using a traditional non-ambiguous editor based on multi-tapping. | |
|---|---|
| T | Press "8/tuv"-key once |
| e | Press "3/def"-key twice |
| r | Press "7/pqrs"-key three times |
| | Timeout / press scroll-key |
| r | Press "7/pqrs"-key three times |
| i | Press "4/ghi"-key three times |
| b | Press "2/abc"-key twice |
| I | Press "5/jkl"-key three times |
| e | Press "3/def"-key twice |

In total this requires 19 keypresses + a timeout (wait for 0.8 second or press the scroll key 10).

When the user wants to write the word "Terrible", the entry concept according to the preferred embodiment of the invention for entering ambiguous characters in a non-predictive way requires:

**Table 3.**

| Key presses used for entering the word "Terrible" when using the non-ambiguish method based on scrolling according to the invention. | |
|---|---|
| T | Press "8/tuv"-key once |
| e | Press "3/def"-key once plus "*"-key once |
| r | Press "7/pqrs"-key once plus "*"-key twice |
| r | Press "7/pqrs"-key once plus "*"-key twice |
| i | Press "4/ghi"-key once plus "*"-key twice |
| b | Press "2/abc"-key once plus "*"-key once |
| I | Press "5/jkl"-key once plus "*"-key twice |
| e | Press "3/def"-key once plus "*"-key once |

In total this requires 20 keypresses. It is seen that there is not a significant difference between the key-presses needed in the per se used multitap entry method and in the preferred embodiment of entering ambiguish characters in a non-predictive way according to the invention. However when the user has learned how to use a predictive editor as T9® provided by Tegic Corporation, and implemented by e.g. the applicant, the user is familiar with scrolling through candidates by using the "*"-key.

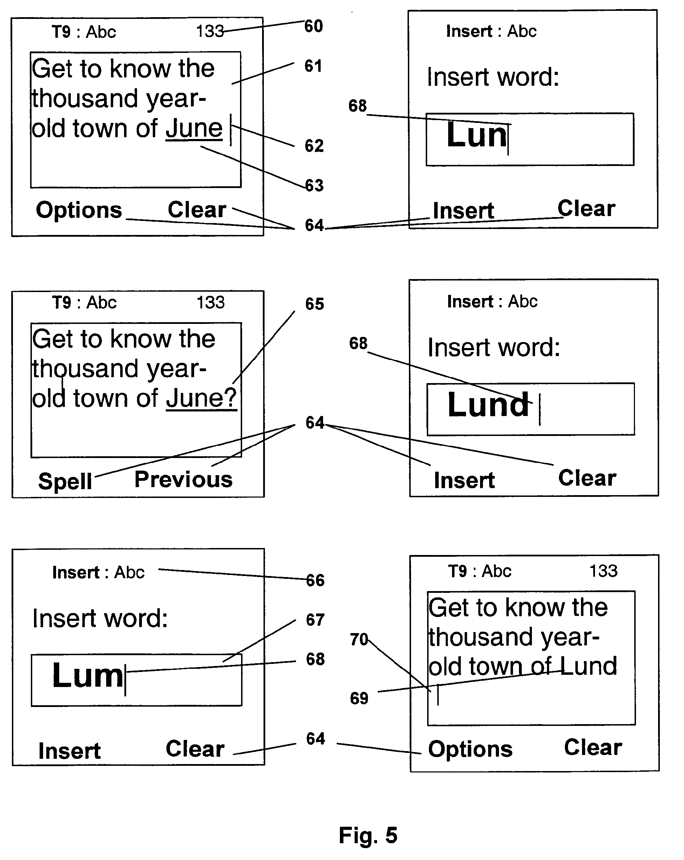

Fig. 5 shows a display scenario, where the first display is a text entry display, in which the user has written the text "Get to know the thousand year-old town of June" in a text part 61 of the display. The word "June" is underlined 63, and this marks that the editor operates on this word. A cursor bar 62 indicates where the next character will be inserted. The user intended to write the word "Lund" - the name of a Swedish town, but the phone offered the user the word "June". The display has an icon row 60, in which it is indicated that a predictive editor - T9® is enabled and a counter shows that the user may enter further 133 characters into the text string - SMS provides a limit of 160 for a single SMS. Two softkey labels 64 indicates that the two softkeys 8 presently have the functionality "Options" and "Clear".

By pressing the "*+" key 66, the processor will display the alternative candidates for the 5-8-6-3 key sequence. The user may select the displayed candidate by pressing the space key 67. When no further alternative candidates are available or when the processor can not suggest a matching word, the cursor bar 62 is replaced with a question mark 65 as shown in the second display of fig. 5, and the two softkey labels 64 now indicates that the two softkeys 8 presently has the functionality "Spell" and "Previous". While the processor scrolls back to the previous displayed candidate when the user presses the "Previous" softkey 8, the "Spell" softkey 8 gives access to the non-ambiguous method based on scrolling according to the invention.

Then the 5-8-6-3 key sequence is cleared and the third display of fig. 5 is shown. An icon row 66 indicates that the non-ambiguous method is used for inserting a word. The two softkeys 8 have the functionality "Insert" and "Clear" (last entered character is cleared). The user has already entered two letters "Lu" and has started to enter the third letter in a text display 67, in which a cursor bar 68 marks where the next letter will be placed.
Firstly the user pressed the "5/jkl" key for entering the L, but the processor suggests the letter "J". However by pressing the "*+" key the user can scroll through all the characters (here j, k, I and 5) available on the "5/jkl" key. This is illustrated with the letter "m" where the user intended to enter the letter "n". When pressing the "*+" key the user scrolls to the letter "n" as seen in the fourth display of fig. 5. By pressing the "3/def" key the user accepts the letter "n" and the processor enters the letter "d" being the first candidate on the "3/def" key. Hereby the word "Lund" appears in the text display field 67, and by pressing the "Insert" softkey 8 the word "Lund" 69 is entered into the text part 61 of the predictive text editor as shown in the sixth display of fig. 5 in the position left when entering the non-ambiguous text entry method. By pressing the space key 67 the word "Lund" will be entered in to the text and the editor is able to continue with entering further words by means of the predictive editor.

When editing the text editor display shown in the first display of fig. 5 the user is able to set whether he wants to use the predictive editor or the non-ambiguous text entry method as default for the entire method by entering the "Options" menu by pressing the "Options" softkey 8. The non-ambiguous text entry method will work as described with reference to the third to the fifth display of fig. 5 but with the text field layout of the first, second and sixth display of fig. 5.

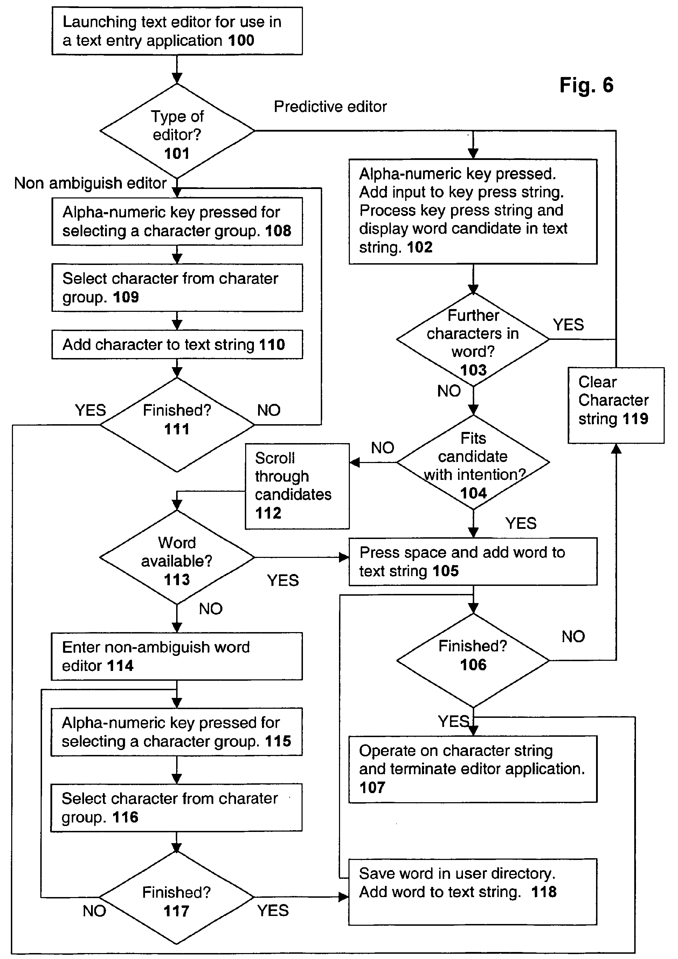

When entering the text editor or text entry mode in fig. 6, the processor 18 launches the text editor at step 100. At step 101, the processer 18 checks whether the user has selected the predictive editor or the non-ambiguous text entry method. If the user has set the latter one as default, he can start to enter the characters one by one by pressing one of the alpha-numeric keys 7 in step 108 for selecting a character group. If necessary the user may select other than the default presented character from the selected character group in step 109 by pressing the "*+" key 66. By selecting a new character, adding a space or passing a timeout the entered character is added in step 110 to the already entered string. The characters are entered one by one during steps 108-110 until the user is satisfied with the entered text string in step 111. Then the user can select to operate on the character string, e.g. by sending the string as an SMS message. This is initiated from the sixth display in fig. 5 by selecting the "Option" menu.

When the user in step 101 has selected the predictive editor, he can start to enter the characters by pressing one of the alpha-numeric keys 7 in step 102 for repeatedly selecting character groups including the characters in the word he intends to write. This is repeated until the user in step 103 deems all characters in a word to have been entered into the word. By inspecting the display, the user may at step 104 see whether the displayed word candidate matches the word the user intended to enter. If there is the desired match the user can accept the displayed word by pressing the space key 67 in step 105. When the user starts to enter a new word and thereby indicate that further text is to be entered in step106, the processor 18 clears the character string register in step 119 and is ready to receive a new keystroke string in step 102 and 103.

If the user at step 104 deems that there is no match between the displayed word candidate and the word the user intended to enter, he may scroll through the list of matching candidates found by the predictive editor by pressing the "*+" key 66 in step 112. If the desired word is available in the list of the matching candidates in step 113, the user may accept this word and press space in step 105 and continue as explained above.

However if the list of matching candidates found by the predictive editor does not include the word the user intends to enter (step 113), the editor application allows the user to enter the non-ambiguous word editor in step 114 and described with reference to the third display of fig. 5. Then the user can start to enter the characters one by one by pressing one of the alphanumeric keys 7 in step 115 for selecting a character group. If necessary the user may select other character from the selected character group in step 116 by pressing the "*+" key 66. The characters are entered one by one during steps 115-117 until the user is satisfied with the entered text string in step 117. Then the user may in step 118 save the entered word in the user directory 41 b and transfer the entered word to the text string in the predictive editor by pressing the "insert" softkey 8 at step 117. This is initiated from the sixth display in fig. 5 by selecting the "Option" menu. Here after the predictive editor will be enabled at step 106.

## Claims

1. A method of entering characters into a text string by means of a non-ambiguous word editor, wherein
• a user provides a key stroke by pressing one of a plurality of alphanumeric keys for selecting a character group comprising a plurality of characters for entering a desired character included in this group,
• a character from said character group is displayed upon detection of the key stroke,
• the user is allowed to scroll through the characters included in the character group for appointing the desired character, and
• the user selects the appointed character to be inserted into the entered text.

2. A method according to claim 1, wherein the user presses one alphanumeric key on a wireless telephone in order to provide said keystroke for selecting a character group.

3. A method according to claim 1 or 2, wherein the user scrolls through the character list step by step by means of a key in the alphanumeric keypad dedicated for scrolling in an editor mode.

4. A method according to claim 1 or 2, wherein the user selects the appointed character by providing a new key stroke for selecting a character group including the following character.

5. A text-editing terminal comprises:
• a keypad for entering characters into a text, said keypad has at least a plurality of character entry keys having respective groups of characters assigned;
• a display for displaying the entered text;
• a scroll key for appointing one of the characters in said respective groups of characters, and;
• selection means for selecting the appointed character to be inserted into the entered text.

6. A text-editing terminal according to claim 5, wherein the text editing terminal is a wireless telephone having a text messaging application.

7. A wireless telephone with a text editing application and comprising:
• a keypad for entering characters into a text, said keypad has at least a plurality of character entry keys having respective groups of characters assigned;
• a display for displaying the entered text;
• a predictive editor for providing word candidates in dependence of a sequence of key strokes provided by the user by pressing one or more of said plurality of character entry keys,
• a non-ambiguous editor, for providing character candidates in dependence of a single of key stroke provided by the user by pressing one of said plurality of character entry keys,
• a scroll key common for the two editor for scrolling through candidates provided by said editors, and
• selection means for selecting the appointed character or word to be inserted into the entered text.
